# EUROPÄISCHE PATENTSCHRIFT

(11) **EP 1 730 626 B1**
(45) Veröffentlichungstag und Bekanntmachung des Hinweises auf die Patenterteilung: **04.03.2020**
(21) Anmeldenummer: 05716454.3
(22) Anmeldetag: 30.03.2005
(51) Int. Cl.: G06F 3/02, G06F 3/033

(54) **LENKRAD-INPUT/INTERAKTIVE OBERFLÄCHE**
STEERING WHEEL INPUT/INTERACTIVE SURFACE
SURFACE INTERACTIVE D'ENTRÉE DE COMMANDE AU VOLANT

(30) Priorität: 30.03.2004 DE 102004016029
(43) Veröffentlichungstag der Anmeldung: 13.12.2006
(73) Patentinhaber: Trachte, Ralf, 5000 Aarau (CH)
(72) Erfinder: Trachte, Ralf, 5000 Aarau (CH)
(86) Internationale Anmeldenummer: PCT/EP2005/003338
(87) Internationale Veröffentlichungsnummer: WO 2005/096131

(56) Entgegenhaltungen:
- WO-A-02/45538
- WO-A-03/054680
- WO-A-03/054680
- WO-A-03/094719
- DE-A1- 3 702 377
- DE-U1- 20 311 135
- DE-U1- 20 311 135
- US-A- 5 790 104
- US-A1- 2002 025 837
- US-A1- 2002 068 605
- US-A1- 2002 068 605
- US-A1- 2003 181 116
- US-B1- 6 210 771
- "SOFT ADAPTIVE FOLLOW-FINGER KEYBOARD FOR TOUCH-SCREEN PADS" IBM TECHNICAL DISCLOSURE BULLETIN, IBM CORP. NEW YORK, US, Bd. 36, Nr. 11, 1. November 1993 (1993-11-01), Seiten 5-7, XP000424761 ISSN: 0018-8689

## Beschreibung

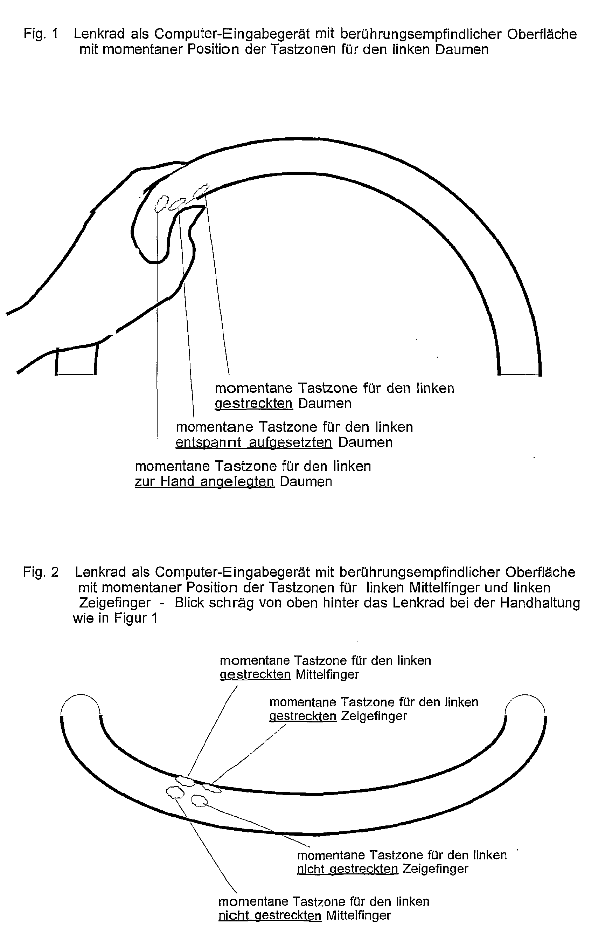

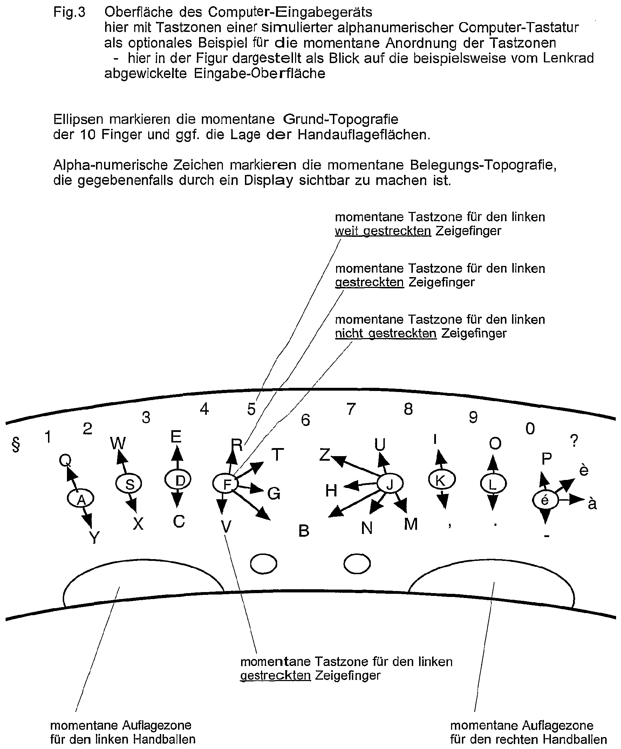

Berührungsempfindliche Oberflächen können zur Computer-Eingabe mit flexibler Anpassung an die Hände genutzt werden. Im Stand der Technik offenbart die WO 03/054680 ein flexibles Computer-Eingabemittel mit Bestimmung der Grund-Topografie. Allmähliche Veränderungen der Grund-Topografie werden berücksichtigt. Die US 2002/0068605 offenbart ein Lenkrad mit eingebauten Eingabemitteln (buttons). Das Lenkrad hat umlaufende, fühlbare Rillen, um das Auffinden der richtigen Handposition zu erleichtern. Dagegen bestehen allerdings mit berührungsempfindlichen Oberflächen innovative Chancen, die bisher ungenutzt blieben. Insbesondere für die Anwendung am Fahrzeug-Lenkrad bieten sich Versionen der dynamischen, fortlaufend auf die momentanen Positionen der Hände bezogenen Eingaben. Am Lenkrad werden für die Hände insbesondere wichtigste Schaltfunktionen, z.B. Fahrtrichtungsanzeiger, Abblenden, Wischen, verfügbar gemacht - vergleiche Fig.1 und Fig.2. Die Oberfläche eines Lenkrads kann also zur Steuerung spezieller, auf das Fahrzeug bezogener Funktionen dienen, aber auch zur Steuerung von Telefon oder PDA und schliesslich auch zur Steuerung eines Personal-Computers durch die Simulation einer fortlaufend dynamisch an die Hände angepassten Tastatur - vergleiche Fig.3 - sicherheitshalber nur bei ruhendem Fahrzeug. Für die letzteren Anwendungsfälle sind die Positionen der momentanen Tastzonen visuell darstellbar. Und es ist möglich, dass das Durchschalten eines Fingers feinmotorisch als nicht-linearer Verlauf von Kraft und Weg wahrnehmbar ist. Hier werden Varianten des Aufbaus derartiger sensitiver Oberflächen erklärt. Insbesondere sind berührungsempfindliche Oberflächen durch bestimmte Gewebe-Faser-Strukturen elastisch ausführbar, die ein feinmotorisch wahrnehmbares nicht-lineares Durchschalt-Verhalten bieten. Entsprechende konstruktive Lösungen werden genannt. Es sind auch visuelle Display-Eigenschaften integrierbar, insbesondere durch Licht emittierende Fasern oder durch eine Schicht Licht emittierender Polymere oder "Electronic Ink". Derartige konstruktive Aufbauten sind schliesslich auch für separate, mobile Computer-Eingabe-Geräte zu nutzen - vergleiche wieder Fig.3.

Die Positionen der aufliegenden **Handflächen** und **Finger** werden abgefragt, um eine Grund-Topografie der maximal zehn Finger zu erzeugen, durch die wiederum eine Belegungs-Topografie für die geltenden Eingabeflächenbereiche errechnet wird. Damit ergeben sich aus Druckauslösungen jeweilige Steuer-Signale oder alphanumerische Signale. Diese Belegungs-Topografie kann für gekrümmte, entspannte oder gestreckte Finger unterschiedliche Signale umfassen. Auch beim **Verlagern** oder **Umgreifen** der Hände bleibt z.B. durch eine Mustererkennung die Identität von Handflächen und Fingern bestimmbar. Eine Vielzahl kleiner Eingabeflächenbereiche wird fortlaufend elektronisch abgefragt und per Mustererkennungsverfahren analysiert, um Grund-Topografie und Belegungs-Topografie zu aktualisieren. Die Eingabefläche, insbesondere die Lenkrad-Oberfläche, besteht also aus einer Vielzahl kleiner Eingabeflächenbereiche in bestimmter Auflösung. Die Zuordnung zwischen momentan betätigtem Eingabeflächenbereich und dem damit ausgelösten Steuersignal bzw. alphanumerischen Signal folgt der fortwährend aktualisierten Belegungs-Topografie. Diese errechnet sich aus der verfügbaren Grund-Topografie laut Mustererkennung und aus den tatsächlich getroffenen Orten in Relation zur bisherigen Belegungs-Topografie. Das heisst die tatsächlich getroffenen Eingabeflächenbereiche innerhalb des Rasters der Belegungs-Topografie lösen erstens ein Signal aus und korrigieren zweitens die Lage des jeweiligen Eingabeflächenbereiches in der Belegungs-Topografie durch eine Mittelung innerhalb eines einstellbaren Erfahrungszeitraums oder innerhalb einer einstellbaren Anzahl von tatsächlichen Betätigungen. Es können fortlaufend korrigierte Kennwerte in diese Rechnung einfliessen. D.h. die Belegungs-Topografie ist individuell und dynamisch an die Hände, Gewohnheiten und momentanes Verlagern und Umgreifen angepasst.

Figur 3 zeigt beispielhaft die Oberfläche des Computer-Eingabegeräts, hier mit Tastzonen einer simulierten alphanumerischen Computer-Tastatur, also mit den momentanen Eingabeflächenbereichen, denen ein jeweiliges alphanumerisches Zeichen oder ein Steuerzeichen zugeordnet sind. Dieses optionale Beispiel für die momentane Anordnung der Tastzonen bzw. der Eingabeflächenbereiche zeigt durch Ellipsen die momentane Grund-Topografie der 10 Finger und die Lage der Handauflageflächen. Und die dargestellten alpha-numerische Zeichen markieren die momentane Belegungs-Topografie, die gegebenenfalls auch durch ein Display sichtbar zu machen ist. Diese Figur stellt den Blick auf die beispielsweise vom Lenkrad abgewickelte Eingabe-Oberfläche dar.

In diesem insbesondere für das Lenkrad nutzbaren Konzept tragen (im Unterschied zur früheren PCT-Anmeldung) auch die aufliegenden Handflächen, insbesondere die Handballen, zur Bestimmung der Grund-Topografie bei. Die individuelle und dynamische Anpassung der Belegungs-Topografie ist insbesondere möglich für eine umfassende Computer-Tastatur (sicherheitshalber nur bei Stillstand des Wagens), für PDA- und Handy-Tastaturen, für längs aufgereihte Tastzonen und in erster Linie für einfache Tastzonen um Zeigefinger und Daumen herum, die auch Tastzonen für gekrümmte Finger von solchen für gestreckte Fingern unterscheiden kann.

Diese Konzepte sind insbesondere durch eine berührungsempfindliche Oberfläche anwendbar, die ein feinmotorisches, taktiles Feedback im Durchschaltverhalten und - für den Gebrauch beim stehenden Fahrzeug - auch ein visuelles Feedback mit Display-Eigenschaften integrieren kann (siehe weiter unten). Es kann zusätzlich ein Doppelklick vereinbart sein, um eine Unterscheidung der gewollten Auslösung gegenüber einer beiläufigen Berührung zu bieten.

Dieses Konzept bringt Daten-Eingabe-Möglichkeiten an agierende Hände heran. Eingaben für Geräte der Datenkommunikation und auf das Fahrzeug bezogene Steuerungsaktivitäten finden auf einer homogenen oder quasi-homogenen Fläche statt, die als Vielzahl von Eingabeflächen wirkt. Die Unterscheidung zwischen einer nicht als Dateneingabe gedachten Veränderung der Hände und Finger - z.B. beim Umgreifen am Lenkrad - und der zur Dateneingabe erfolgten absichtlichen Druckauslösung der Hände ist entweder aus der Art der Abweichung der Positionen und Druckauslösungen gegenüber der momentan geltenden Grund-Topografie erkennbar oder sollte z.B. als Doppelklick gekennzeichnet sein.

Insbesondere vier Anwendungsfälle leistet dieses Konzept:
1.) Die Eingabefläche simuliert eine Computer-Tastatur. Es kann dann z.B. eine sensitive Lenkrad-Oberfläche - beim ruhenden PKW - als Computer-Tastatur benutzt werden. Zur Initialisierung genügt es, die zehn Finger aufzusetzen. Die zur Signal-Auslösung notwendigen Abweichungen von der Grund-Topografie können relativ klein bleiben, weil dieses System auch damit arbeiten kann. Dieses lernfähige System kann auch sehr kleine Distanzen z.B. zwischen normalen und gestreckten Finger-Positionen als hinreichend erkennen. Insofern passt eine Computer-Tastatur auch auf die Oberfläche eines Lenkrads.
2.) Die Eingabefläche simuliert eine PDA- oder Handy-Tastatur.
   A) Man gibt zur Initialisierung durch z.B. zwei bis fünf - oder bis zehn - gespreizt aufgesetzte Finger die Ausdehnung der Standard-Handy-Tastatur vor. Bei zwei bemerkten Druckorten kann z.B. durch die System-Voreinstellung angenommen werden, dass es sich um Zeigefinger und Mittelfinger handelt, woraus die Lage der weiteren Finger folgt. In diesem Sinne können auch drei, vier oder fünf Druckorte per Voreinstellung in nahe liegender Weise interpretiert werden.
   B) Oder man hält zur Initialisierung, also zur Gewinnung der Grund-Topografie das Lenkrad mit einer Hand fest und setzt die z.B. zwei - bis fünf - Finger der anderen Hand gespreizt auf. Daraus folgen Grund-Topografie und schliesslich Belegungs-Topografie.
3.) Die Eingabefläche bietet etwa zehn längs aufgereihte Eingabeflächenbereiche d.h. Tastzonen, die insbesondere ein PDA oder Handy steuern. Durch z.B. zwei bis fünf - oder bis zehn - gespreizt aufgesetzte Finger gibt man zur Initialisierung die Ausdehnung der Tastzonen vor - siehe auch Punkt 2.. Daraus folgen Grund-Topografie und schliesslich Belegungs-Topografie. Eine markante Distanz in der Mitte trennt die Eingabeflächenbereiche der linken und der rechten Hand.
4.) Die Eingabefläche interpretiert insbesondere die Tastzonen um Zeigefinger und Daumen herum als steuernde Eingabeflächenbereiche. Damit sind z.B. Fahrtrichtungsanzeiger, Auf- und Abblenden und Scheibenwischer zu steuern, ohne die Hand vom Lenkrad zu nehmen. Zur Initialisierung genügt das übliche Umfassen des Lenkrads. Fortlaufendes Umgreifen der Hände wird rechnerisch korrigiert und angepasst. Das Erkennen des Steuersignals eines Fingers ist hier relativ einfach, weil die Grund-Topografie durch die aufgestützte Hand, also insbesondere durch die aufgestützten Handballen fortlaufend erkennbar ist. Die Voreinstellungen können z.B. folgende sein:
   A) Für die Steuerung des Fahrtrichtungsanzeigers gelten z.B. Doppelklick des locker gestreckten linken Zeigefingers als Fahrtrichtungsanzeiger "links" und Doppelklick des locker gestreckten rechten Zeigefingers als Fahrtrichtungsanzeiger "rechts". Das gelegentlich nötige Ausschalten des Fahrtrichtungsanzeigers kann dann per Doppelklick auf einer Stelle etwa mittig zwischen beiden Grund-Positionen der Hände erfolgen oder durch nochmaligen Doppelklick zurückgenommen werden.
   B) Z.B. das Aufblenden des Scheinwerfers kann durch Doppelklick des leicht angewinkelten linken Zeigefingers erfolgen. Das Abblenden kann durch Doppelklick des linken Daumens erfolgen.
   C) Z.B. das Schalten des Scheibenwischers auf eine schnellere Geschwindigkeit - von Intervallschaltung auf Normal- und auf Schnellschaltung - kann durch Doppelklick des leicht angewinkelten rechten Zeigefingers erfolgen. Das Schalten des Scheibenwischers auf eine langsamere Geschwindigkeit kann durch Doppelklick des rechten Daumens erfolgen.
   D) Oder es lassen sich die wichtigsten Steuer-Funktionen für das Fahrzeug mit nur einer Hand am Lenkrad auslösen. Um beispielsweise die rechte Hand für das Schalten oder andere Handhabungen frei zu haben, können die wichtigsten Steuer-Funktionen mit der linken Hand betätigt werden - vergleiche Fig.1 und 2. Die Zuordnungen können individuell eingestellt sein. Z.B. können der Doppelklick des locker gestreckten linken Mittelfingers als Fahrtrichtungsanzeiger "links" gelten und der Doppelklick des locker gestreckten linken Zeigefingers als Fahrtrichtungsanzeiger "rechts" gelten. Abblenden und Wischer können z.B. durch den linken Daumen aktiviert werden.
   Die wesentliche Identifikation der Daumen und Zeigefinger folgt aus der aktuell verfügbaren Grund-Topografie. In diesem Bespiel ist darüber hinaus nur die Unterscheidung zwischen leicht gekrümmtem und locker gestrecktem Zeigefinger nötig. Sie kann im Sinne der individuellen und dynamischen Anpassung des Systems erfolgen, d.h. sie kann schliesslich durch das "lernfähige" System auf eine geringe und bequeme Differenz "trainiert" und reduziert werden. Gefährliche Steuersignale sollten hier aus Sicherheitsgründen nicht möglich sein, d.h. z.B. sollte durch dieses System kein Ausschalten des Scheinwerfer-Lichts oder kein völliges Ausschalten des Scheibenwischers möglich sein. (Beides müsste dann durch übliche Schalter am Armaturenbrett erfolgen). - Als Aktivierung des gesamten Systems kann z.B. ein vierfacher Klick durch einen Zeigefinger vereinbart sein.

Zur Unterscheidung einer beiläufigen Bewegung gegenüber dem absichtlichen Drücken zur Auslösung eines Steuersignals kann z.B. der Doppelklick als Voreinstellung gelten, das trifft insbesondere in den Anwendungsfällen 2, 3 und 4 zu. Bei Nutzungen mit häufigem Verlagern und grösserem Umgreifen der Hände z.B. beim Lenken eines Automobils kann also der Doppelklick vereinbart sein, um tatsächlich ein entsprechendes Steuersignal auszulösen, z.B. Aufblenden des Scheinwerfers.

Grosse Verlagerungen der Handflächen, insbesondere der Handballen, können obendrein durch eine Muster-Erkennung geprüft und erkannt werden, die aus der Topologie grosser und kleiner Druckflächen die Identität der Handflächen und Finger bestimmt und damit die Bestimmung der Grund-Topografie ergänzt. Jedes Umgreifen erfordert eine erneute Prüfung oder sozusagen eine erneute Initialisierung der Grund-Topografie.

Die für individuelle Hände und momentane Situationen fortlaufend anpassungsfähigen sensitiven Lenkrad-Oberflächen bzw. Eingabegeräte sind insbesondere als Gewebe in mehreren Varianten zu realisieren. Einzusetzen und zu kombinieren sind Gewebe-Typen oder Schichten, die (a) auf Berührung elektrisch wirksam reagieren, etwa durch messbare Widerstands- oder KapazitätsÄnderung, die (b) ein feinmotorisches, taktiles Feedback im Durchschalten aufweisen und (c) Gewebe oder Schichten, die ein visuelles Feedback bieten, z.B. Gewebe mit Licht emittierenden Fasern. Entweder legt man diese Gewebe-Typen bzw. Schichten übereinander oder man integriert besagte Qualitäten in einem komplexen Gewebe.

Die hier benannten Lösungen machen also (a) die Eingabefläche auch für mehrere zugleich aufgesetzte Finger berührungs- bzw. annäherungsempfindlich, sie bieten (b) ein spürbares Durchschalt-Verhalten und sie machen (c) zugleich die momentan wirksamen Zeichen in ihrer Anordnung auf der Eingabefläche optisch erkennbar. Sie stehen damit in gewisser Konkurrenz zu üblichen Computer-Tastaturen und zu üblichen Touch-Screens bzw. interaktiven Displays. Sowohl sensorische Eingabe-Qualitäten als auch visuelle Display-Qualitäten in einer Fläche zu bieten, ist sinnvoll, um das Interface fortlaufend dynamisch an Hände, Handhabungsgewohnheiten und Situationen anzupassen.

Es geht also darum, die aktuell für die Zeichen jeweils geltenden Eingabeflächenbereiche in angemessener Auflösung sichtbar zu machen. Es kann schon eine optische Kennzeichnung der Belegungs-Orte bzw. der verschiedenen Eingabeflächenbereiche genügen, z.B. durch leuchtfähige Textilfasern, um diese momentane Belegungs-Topographie zu markieren. Bestenfalls können die Zeichen oder Steuerbefehle in feiner Auflösung dargestellt werden, z.B. durch "Electronic Ink" oder sehr feine leuchtfähige Textilfasern oder durch organische LED. "Elektronische Tinte" wird zur Zeit beispielsweise von den Firmen "Xerox" und "E-Ink" entwickelt. Diese Computer-Eingabegeräte können also mit einer Schicht "Electronic Ink" oder Licht emittierenden Polymers, insbesondere OLED, überzogen sein, um die momentane Zuordnung zwischen Eingabeflächenbereich und jeweiligem Zeichen visuell anzuzeigen. Das gilt sowohl für ein Lenkrad, das z.B. beim ruhenden Fahrzeug auch als Computer-Tastatur zu nutzen ist, als auch für ein anderes Computer-Eingabegerät.

Die Eigenschaften eines solchen Gerätes bzw. eines solchen Verfahrens bewegen sich damit im Feld zwischen einerseits einer tastaturähnlichen Fläche, die keine oder nur einfachste visuelle Mitteilungen gibt und andererseits einem optisch hochwertigen Touchscreen. Die hier erklärten Lösungen können idealer weise auch mehrere Finger zugleich unterscheiden. Es kann auch genügen, dass nur ein Teil der optisch dargestellten Fläche - insbesondere der untere Teil - die besagte momentane Anordnung der Zeichen darstellt, während der andere - obere - Teil der Fläche nur als Screen dient. Es sind verschiedene Varianten denkbar, die jeweils Kompromisse zwischen optischen und taktilen Qualitäten eingehen.

Als Lenkrad-Überzug und als leicht-gewichtiges und transportables Computer-Eingabe-Gerät eignen sich insbesondere folgende Lösungen mit besonderen Eigenschaften:
Diese Gewebe sind u.a. ausführbar, indem bestimmte Gewebe-Typen übereinander gelegt werden: Ein Typ aus elektrisch bzw. durch Änderungen elektrischer Kapazität wirksamen berührungsempfindlichen Fasern oder Lamellen, ggf. ein separater Gewebe-Typ für das taktile Feedback des nicht-linearen Durchschaltverhaltens und ein weiterer Gewebe-Typ mit Display-Eigenschaften, das insbesondere durch Licht emittierende Fasern wirkt. Diese Gewebe können in bestimmten Abständen miteinander so verknüpft sein, dass eine angemessen genaue Zuordnung zwischen berührungsempfindlichen Eingabeflächenbereichen und visuell erkennbaren Display-Bereichen hergestellt ist.

Diese Gewebe sind insbesondere ausführbar, indem diese Eingabe-Oberfläche sowohl aus elektrisch bzw. elektrostatisch oder durch Änderungen elektrischer Kapazität wirksamen berührungsempfindlichen Fasern oder Lamellen besteht, als auch aus damit verwobenen Fasern mit Fähigkeit zur Lichtemission. Diese Licht emittierenden Fasern wirken als visuell erkennbare Display-Bereiche und zeigen die momentane Zuordnung zwischen Eingabeflächenbereich und jeweiligem Zeichen visuell an.

In diesen berührungsempfindlichen Geweben oder in benachbarten Gewebe-Lagen können speziell geformte Fasern oder Lamellen mit gewisser Biegesteifigkeit oder Torsionssteifigkeit eingewebt sein, die sich im - für die Finger wahrnehmbaren - Verhältnis von Kraftaufwand zu Federweg nicht-linear verhalten: Nach gewissem kleinen Federweg steigt der weitere Kraftaufwand nicht mehr, sondern er stagniert oder nimmt wieder ab. Damit bietet sich im Sinne eines Kniehebel-Effekts ein feinmotorisch deutlich fühlbares Durchschalten.

Dieser Effekt ist insbesondere zu erreichen, indem man elastische Fasern oder Lamellen mit angemessener Vorspannung einwebt, die an der Oberfläche dieser Gewebe-Lage_leicht heraus ragende kleine Bögen aufspannen, die durch Fingerdruck elastisch einzudrücken sind. Diese Gewebe-Lage kann sich gegenüber angrenzenden festen Gewebe-Lagen abstützen.

Für das Betätigen einer solchen Stelle dieser Eingabe-Oberfläche gilt innerhalb der Gewebe-Lagen "actio = reactio". D.h. die durch einen Finger aufgewendete Kraft wird durch mehrere Gewebe-Lagen weiter geleitet und das Gewebe mit besagtem fei nmotorischem Feedback kann als irgendeine der Gewebe-Lagen eingefügt sein. Diese Lage muss nicht identisch mit der Signal gebenden Gewebe-Lage sein. Es können also die Funktionen des taktilen Feedbacks und der elektrisch wirksamen Deformation durchaus in separaten Schichtungen ("Layers") installiert sein Eine einfache Variante mit insbesondere metallischer Faser kreisähnlichen Querschnitts, die wie unten beschrieben speziell vor geformt ist, muss durch das räumliche Gewebe seitlich gestützt werden.

In der **Variante "Lamellen-Bögen"** wird dagegen ein lamellenähnliches Halbzeug eingewebt. In einer der Gewebe-Lagen sind wie unten beschriebene speziell geformte Flachbänder bzw. Lamellen eingewebt. Die so gebildeten Lamellen-Bögen haben aufgrund ihres Querschnittprofils eine Stabilität in seitlicher Richtung, wodurch ihr Federweg überwiegend senkrecht zur Eingabe-Oberfläche gerichtet wird. Jeweils ein elastischer Lamellen-Bogen erzeugt einen taktil wahrnehmbaren Eingabeflächenbereich. Er ist mit einer scharnierähnlichen, relativ engen Krümmung jeweils unten an einer oder mehreren quer verlaufenden Fasern abgestützt, um nach der Betätigung ein Zurückfedern sicher zu stellen. Diese quer verlaufenden Fasern leiten die horizontalen Kräfte in eine untere zugfeste Schicht.

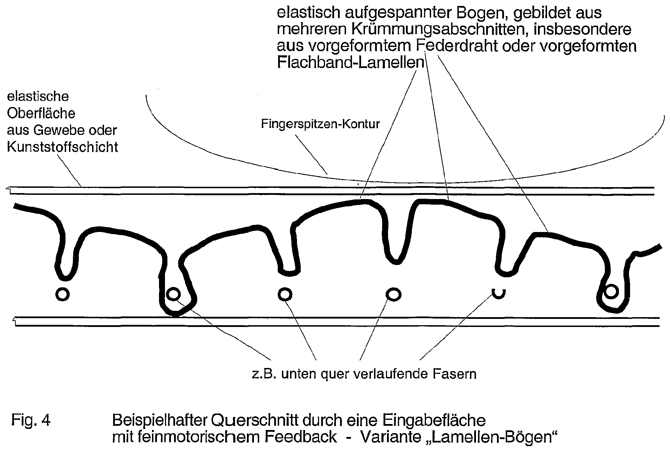

Diese Bögen sollten aus Fasern, Lamellen oder Flachband bestehen, die in bestimmter Weise vorgeformt sind, so dass in bestimmten Abständen wiederholt jeweils eine Krümmung nach unten und eine Krümmung nach oben und wieder eine Krümmung in die anfängliche Richtung längs der Oberfläche auftreten, die bei der Einspannung etwa jedes zweiten, insbesondere jedes dritten oder vierten oder fünften dieser Krümmungs-Stellen in das Gewebe leichte Bögen bilden, die bei Druckausübung durch Finger sowohl wie ein überlasteter Brückenbogen nach unten federn als auch in ihrer Längsrichtung komprimieren, ohne nennenswert seitlich auszuscheren, um also durch ihr Verhältnis von Höhe dieser Krümmungs-Stellen zur Länge des dazwischen befindlichen Materials und durch die Kompressionsfähigkeit in etwa waagerechter Richtung das Einfedern eines Bogens mit Kniehebel-Effekt zu unterstützen. Das ist also eine Art gedehnter Zick-Zack-Form oder auch mit weicheren Radien eine Art Wellenform. **Vergleiche** **Fig. 4****.** Beispielsweise können pro Zentimeter zwei Bögen mit jeweils z.B. vier dieser Zick-Zack-Abschnitte realisiert sein, so dass eine Fingerkuppe stets mindestens einen dieser Mikro-Schalter trifft. Grundsätzlich kann man auch zwei - oder mehr - dieser Feedback-Gewebe-Lagen etwas versetzt übereinander legen, um eine feinere Auflösung zu erzielen.

Zwischen den Bindungen durch die Querfasern stehen also mehrere - z.B. zwei, drei oder vier - der besagten Krümmungsabschnitte frei und ermöglichen das Einfedern dieses Bogens mit gewissem Kniehebeleffekt: Mit zunehmendem Druck auf den Bogen federt er ein, mit weiterem Einfedern verliert er seine Tragfähigkeit - in zur Eingabeoberfläche senkrechter Richtung - und kann schliesslich ohne grösseren Kraftaufwand einfedern und auf darunter befindliche quer verlaufende Fasern durch schlagen.

Statt der besagten stetigen Zick-Zack- oder Wellen-Form können auch schon in der Vorformung immer diejenigen **Krümmungs-Abschnitte**, die in der zugfesten Gewebe-Schicht eingebunden sind, eine Nuance höher sein als die dazwischen befindlichen. Damit federt ein solcher Bogen bei Betätigung etwas weiter ein und weist einen etwas deutlicheren Kniehebel-Effekt auf.

Zum Beispiel ist die Variante mit zwei oder vier freien Krümmungs-Abschnitten innerhalb eines Bogens gut kompatibel mit der Variante von drei oder fünf oder sieben darunter quer verlaufenden, nebeneinander liegenden Fasern: Denn das Einfedern eines Lamellen-Bogens trifft mit der Mitte zwischen seinen Krümmungs-Abschnitten unten auf die ggf. zu messende, elektrisch leitende mittlere der drei oder fünf oder sieben Quer-Fasern, was zum deutlichen elektrischen Mess-Signal führen kann. Vergleiche Fig. 4. Im unteren Gewebe-Bereich stützen und fixieren sozusagen die anderen Fasern die Lage der ggf. zu messenden Faser unter der Bogen-Mitte. Der Vorteil dieser Lösung ist, dass zunächst ohne Betätigung eine deutliche Distanz zwischen Bogen und zu messender Faser besteht, dann aber im Falle der Betätigung eine Berührung bzw. Annäherung zu grossen Messwert-Differenzen führt. Je nach Methode kann (a) die Widerstandsänderung zwischen nicht isolierten leitenden Faser- und Bogen-Elemente gemessen werden oder (b) die Kapazitätsänderung zwischen isolierten Faser- und Bogen-Elementen gemessen werden.

Die Faser- oder Lamellen-Bögen können sich auch seitlich gegenseitig durch horizontalen Versatz - in Richtung längs des Bogens "phasen-verschoben" - gegenüber dem jeweils benachbarten Faser- oder Lamellen-Bogen stützen. Ihr Federweg ist durch dieses seitliche Stützen überwiegend senkrecht zur Eingabe-Oberfläche geführt. Und innerhalb einer (unteren) zugfesten Schicht können die Zugbelastungen aufgefangen werden: In Längsrichtung können sich die Fasern- oder Lamellen-Bögen gegenseitig stützen, indem sich dort die zur Oberfläche tangentialen Kräfte untereinander kompensieren, die bei Druck-Betätigung auftreten.

Optional können die Fasern oder Lamellen mit besagten Eigenschaften des Feedbacks durch Kniehebel-Effekt in zwei - insbesondere zueinander orthogonalen - Richtungen eingewebt sein und sich dadurch zusätzlich in ihrer Lage gegenseitig stabilisieren. Es bilden sich kleine, jeweils aus sich kreuzenden Fasern oder Lamellen gebildete "Gewölbe", die einfedern können.

Innerhalb des gesamten Aufbaus kann bereits eine der Gewebe-Lagen das feinmotorische Feedback herstellen. Dazu sollte diese Lage aus einem unteren Gewebe-Bereich bestehen, der ihr eine mechanische Stabilität, insbesondere Zugfestigkeit verleiht, und sie sollte aus einem oberen Gewebe-Bereich bestehen, der wesentlich aus den zu betätigenden elektrisch wirksamen Fasern oder Flachband-Lamellen besteht. Der obere Bereich weist also dadurch federnde Abschnitte auf, dass Fasern oder Flachband-Lamellen-Bögen als kleine, in sich frei tragende Abschnitte eingewebt sind. Diese zwei besagten Gewebe-Bereiche sind untereinander eng verwoben. Sie bilden als Ganzes diejenige Gewebe-Lage, die ein feinmotorisch wahrnehmbares Feedback für die Finger erzeugt.

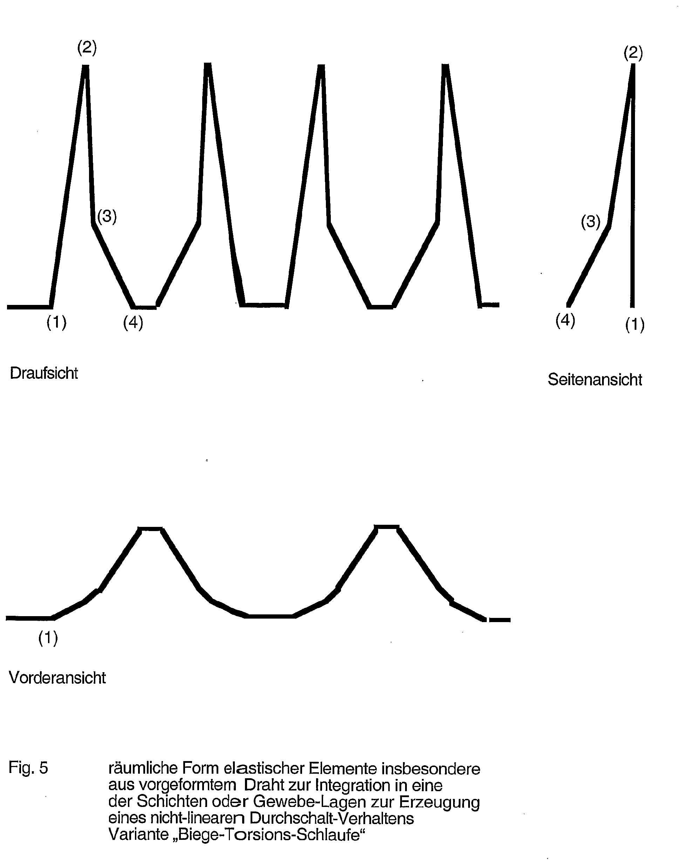

Das besagte feinmotorisch wahrnehmbare nicht-lineare Durchschalt-Verhalten ist z.B. auch durch folgende Konstruktion realisierbar - **Variante "Biege-Torsions-Schlaufen":** Vergleiche Fig.5 : Ein Federdraht ist so vorgeformt, dass er wiederholt durch eine enge Krümmung (1) seitlich auskragt, nach einer bestimmten Strecke mit enger Krümmung (2) zurückkehrt, wobei er zugleich etwas an Höhe gewinnt, um bei einer bestimmten Distanz von der anfänglichen Hauptlinie - waagerechte Achse gemäss Fig.5 - entfernt in einem Knickpunkt (3) sowohl steiler an Höhe zu gewinnen als auch etwas stärker seitlich zu weisen, bis er einen höchsten Draht-Abschnitt (4) erreicht, der die Druckausübung durch Finger bzw. Handflächen aufnimmt. Der Draht-Abschnitt zwischen Knickpunkt (3) und höchstem Bereich (4) weist in der Seiten-Ansicht eine Steigung von z.B. etwa 30 bis 45 Grad auf. Und in der Draufsicht von Fig.5 ist er gegenüber der Hauptlinie - waagerechte Achse - z.B. ungefähr 45 Grad geneigt. Durch diesen Draht-Abschnitt entsteht aufgrund seines Hebels insbesondere eine Torsions-Belastung für den Abschnitt (2) bis (3), die bei Betätigung diesen Hebel zunächst sogar noch wachsen lässt, so dass die Torsionsbelastung überlinear anwächst und die weitere Torsion begünstigt. Ist der Abschnitt (3) bis (4) in der Seitenansicht etwa waagerecht, so ist die effektive Steifigkeit dieses Aufbaus durch Torsion relativ gering. Das führt zum spürbar weichen Durchschalt-Verhalten.

Der Anteil der Steifigkeit dieses Aufbaus, der durch Biegung hergestellt wird, weist ebenfalls einen Bereich des weichen Durchschaltens auf: In der Seitenansicht wird deutlich, dass die Punkte (1) und (4) sich annähern, indem die dazwischen liegenden Draht-Abschnitte elastisch verbogen werden. Der Anteil der Kräfte in Richtung von Punkt (1) zu (4)) verliert beim Einfedern erheblich an Stützfähigkeit und seine vertikal tragende Komponente bricht schliesslich ein und bietet einen Kniehebel-Effekt.

Die Relation der Anteile beider Effekte ist durch die Wahl der Winkel und Abmessungen konstruktiv in gewissen Grenzen wählbar. So könnte man etwa auf den nicht-linearen Torsions-Effekt verzichten, indem man die Punkte (2) bis (4) des Drahtes ohne Krümmung verbindet. Oder man könnte ihn noch betonen, indem zusätzlich in der oben beschriebenen Konstruktion im Bereich des Punktes (4) ein Gelenk integriert wird.

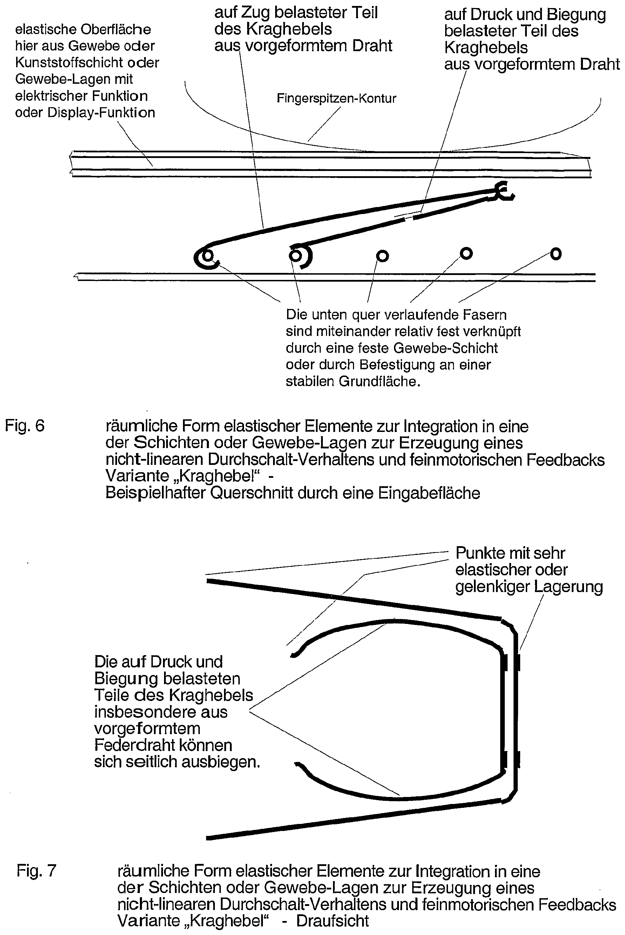

Eine weitere Variante elastischer Elemente besteht insbesondere aus vor geformten Draht- oder Lamellen-Element - **Variante "Kraghebel":** Vielfach in die Eingabeoberfläche integrierte Elemente - vergleiche Fig.6 und Fig.7 - sind so aufgebaut, dass ein Teil eines jeweils spitzwinkligen Kraghebels auf Zug belastet wird, ein anderer Teil dieses Kraghebels auf Druck belastet wird. Der erzeugt durch eine seitliche Ausbuchtung dieses zweiten Teils eine Biegebelastung, so dass bei Betätigung des Kraghebels etwa senkrecht zur Eingabeoberfläche diese Ausbuchtung elastisch weiter ausbiegt und damit der Hebel seine Stützfähigkeit durch immer ungünstiger werdendem Hebel verliert und schliesslich bei minimaler Betätigungskraft nachgibt. Diese Elemente bieten ein feinmotorisch wahrnehmbares nicht-lineares Durchschalten.

Ein Einrollen all dieser Strukturen ist möglich, indem man die Faser-Bögen bzw. Lamellen-Bögen bzw. die Biege-Torsions-Schlaufen auf der Aussenseite lässt und sie beim Einrollen etwas gedehnt werden.

Das Verweben oder Zusammenwirken besagter elektrisch wirksamer Fasern, Lamellen oder Gewebe-Lagen einerseits und Licht emittierender Fasern andererseits ist insofern möglich, als elektrisch kapazitiv wirksame Fasern isoliert sein können, weil schon mit ihrer Annäherung eine hinreichend grosse Änderung insbesondere der elektrischen Kapazität zwischen den Fasern entsteht und als Signal-Auslösung zu werten ist, aber die besagten visuell wirksamen Display-Fasern, insbesondere Licht emittierende Polymer-Fasern, dagegen genau durch die Berührungsstellen sich kreuzender Fasern Licht aussenden und nicht isoliert sein sollen.

Bei den hier vorgeschlagenen Computer-Eingabegeräten kann es sein, dass durch die visuelle Anzeige störende elektrische oder elektro-magnetische Felder hervorgerufen werden. Sie können aber in der Auswertung der Eingabe-Daten der berührungsempfindlichen und näherungsempfindlichen Schicht wieder korrigiert und heraus gerechnet werden. Diese eventuellen störenden Feldveränderungen sind prinzipiell durch die anzuzeigenden Daten bekannt und können damit für die jeweiligen kleinen Eingabeflächenbereiche korrigiert werden.

Die an eine Computer-Einheit weiter zu leitenden Signale dieser sensitiven Oberfläche können stets bei unbelasteter Ruhelage als "Null-Signal" kalibriert werden. Das Eingabegerät ist damit also auch in gewölbten Lagen zu gebrauchen. Es sind damit auch eventuelle allmähliche Deformationen des Gewebes kompensierbar. - Beim Lenkrad ist insbesondere das statische Halten als Ruhelage zu interpretieren, das keine Steuersignale auslöst. Sinngemäss können generell textile sensitive Oberflächen in diversen Wölbungen als neutrale Ausgangslage kalibriert werden.

## Patentansprüche

1. Eingabegerät in Form eines Lenkrads oder Lenkrad-Elements,
bestehend aus einer Eingabeoberfläche mit einer Vielzahl von berührungsempfindlichen Eingabeflächenbereichen
und einer damit gekoppelten Steuereinheit,
**dadurch gekennzeichnet,**
**dass** die Berührungen der Eingabeflächenbereiche
durch Handflächen, insbesondere durch Handballen, und durch Finger als Handflächen und als Finger erkannt werden
und genutzt werden, um die Identität der einzelnen Finger zu berechnen und damit eine vorübergehend gültige Grund-Topografie für Handflächen und Finger gegenüber den Eingabeflächenbereichen zu berechnen,
mittels der die Belegungs-Topografie zu berechnen ist,
durch die ***einem Teil der*** Eingabeflächenbereiche in momentan gültiger Weise ein jeweiliges alphanumerisches Zeichen oder eine Steuerfunktion zuzuweisen ist und bei jedem Verlagern eine erneute Initialisierung der Grund-Topografie stattfindet.

2. Eingabegerät ***nach Anspruch 1*** **dadurch gekennzeichnet, dass** besagte Zuweisung zwischen Eingabeflächenbereichen und jeweiligen alphanumerischen Zeichen, Schalt- oder Steuerfunktionen Belegungs-Orte, d.h. zu betätigende Eingabeflächen-Bereiche für gekrümmte Fingerhaltungen von Belegungs-Orten, d.h. zu betätigenden Eingabeflächen-Bereichen für gestreckte Fingerhaltungen unterscheiden kann.

3. Eingabegerät nach Anspruch 1 oder **2 gekennzeichnet dadurch, dass** die Bestimmung einer Grund-Topografie für die Hände des Nutzers gegenüber den Eingabeflächenbereichen in einer Initialisierungsphase aufgrund der aufgelegten Hände des Nutzers erfolgt und dann in einer Betriebsphase fortwährend an aktuelle Bedingungen angepasst wird und dass damit eine Belegungs-Topografie fortwährend an individuelle und dynamische Bedingungen angepasst wird, die den Eingabeflächenbereichen in momentan gültiger Weise ein jeweiliges alphanumerisches Zeichen oder eine Steuerfunktion zuweist.

4. Eingabegerät nach einem oder mehreren der vorherigen Ansprüche, **dadurch gekennzeichnet, dass** die Bestimmung der Belegungs-Topografie, die den Eingabeflächenbereichen alphanumerische Zeichen oder Steuerfunktionen oder Schaltfunktionen zuweist, in einer Initialisierung nach einem festgelegten Schema erfolgt, das einer üblichen Computer-Tastatur entspricht oder einer üblichen Tastenbelegung eines Handy entspricht oder längs aufgereihten Tastzonen für bis zu zehn Finger entspricht oder Tastzonen um Zeigefinger und Daumen herum entspricht, die einfache Schalt- und Steuerfunktionen erfüllen.

5. Eingabegerät nach Anspruch 1 bestehend aus einer Eingabeoberfläche mit vielen berührungsempfindlichen Eingabeflächenbereichen und einer damit gekoppelten Steuereinheit, **dadurch gekennzeichnet, dass** aus vielen Grund-Positionen der Handflächen und Finger gegenüber den Eingabeflächenbereichen heraus eine Gruppierung von alphanumerischen Funktionen oder Steuerfunktionen oder Schaltfunktionen verfügbar ist, deren Zuordnung zu den konkreten Eingabeflächenbereichen fortlaufend, dynamisch an individuelle und momentane Bedingungen angepasst wird.

6. Eingabegerät nach einem oder mehreren der Ansprüche 1 bis **3**, **dadurch gekennzeichnet, dass** zwei, drei, vier, fünf oder sechs vereinbarte Steuerfunktionen oder Schaltfunktionen aus vielen Positionen der Handflächen und Finger gegenüber den Eingabeflächenbereichen heraus stets durch die Zeigefinger, Mittelfinger oder Daumen der linken oder der rechten Hand zu betätigen sind.

7. Eingabegerät nach einem oder mehreren der Ansprüche 1 bis **3 gekennzeichnet dadurch, dass** auf besagter berührungsempfindlicher Oberfläche des Eingabegerätes eine Reihe von alphanumerischen Zeichen, Steuerzeichen oder Schaltfunktionen verfügbar sind, die hinsichtlich ihrer Art und Anzahl einer üblichen Computer-Tastatur ähnlich sind und wobei die topografische Anordnung der den alphanumerischen Zeichen, Steuerzeichen oder Schaltfunktionen jeweils entsprechenden Eingabeflächenbereiche-also deren Belegungs-Topografie individuell und dynamisch an die Hände, Gewohnheiten und momentanes Verlagern und Umgreifen angepasst wird.

8. Eingabegerät nach einem oder mehreren der Ansprüche 1 bis **7**, **dadurch gekennzeichnet, dass** die momentan gültige Zuordnung von Zeichen oder Steuerfunktionen zu den Eingabeflächenbereichen dem Nutzer optisch angezeigt wird.

9. Computer-Eingabegerät nach Anspruch 1 oder einem anderen der vorhergehenden Ansprüche **dadurch gekennzeichnet, dass** besagte berührungsempfindliche Lenkrad-Oberfläche aus Schichten oder Gewebe-Lagen besteht, die mehrere interaktiv wirksame Eigenschaften vereinen, indem sie insbesondere ein taktiles Feedback über das Durchschalten der Oberfläche bieten und/oder insbesondere ein visuelles Feedback bieten über die momentanen, fortlaufend veränderbaren Zuordnungen zwischen Eingabeflächenbereichen und ausgelösten Zeichen oder Steuerfunktionen, wobei sich diese Zuordnungen insbesondere fortlaufend dynamisch an die durch tippende Fingerspitzen tatsächlich getroffenen Orte anpassen und einer veränderlichen Belegungs-Topografie entsprechen.

10. Eingabegerät nach Anspruch **9**, **gekennzeichnet dadurch, dass** ein Gewebe mit elektrisch wirksamen berührüngsempfindlichen Fasern oder Lameiien und ein Gewebe mit Display-Eigenschaften, insbesondere mit Licht emittierenden Fasern, übereinander gelegt sind, um die momentane Zuordnung zwischen Eingabeflächenbereich und jeweiligem Zeichen visuell anzuzeigen, wobei diese Zuordnung insbesondere durch fortlaufende dynamische Anpassung an die tatsächlich getroffenen Orte der tippenden Fingerspitzen einer fortlaufend veränderlichen Belegungs-Topografie entspricht.

11. Eingabegerät nach Anspruch **9** bestehend aus einer Eingabe-Oberfläche mit einer Vielzahl von berührungsempfindlichen Eingabeflächenbereichen und einer damit gekoppelten Steuereinheit, **dadurch gekennzeichnet, dass** ein Gewebe sowohl aus elektrisch, elektrostatisch oder durch Änderungen elektrischer Kapazität wirksamen berührungsempfindlichen Fasern oder Lamellen als auch aus damit verwobenen Fasern mit Fähigkeit zur Licht-Emission besteht, wobei diese Fasern als Vielzahl visuell erkennbarer Display-Bereiche wirken, um die momentane Zuordnung zwischen Eingabeflächenbereich und jeweiligem Zeichen visuell anzuzeigen, wobei diese Zuordnung insbesondere durch fortlaufende dynamische Anpassung an die tatsächlich getroffenen Orte der tippenden Fingerspitzen einer fortlaufend veränderlichen Belegungs-Topografie entspricht.

12. Eingabegerät nach einem oder mehreren der Ansprüche **9** bis **11**, **dadurch gekennzeichnet, dass** in das berührungsempfindliche Gewebe oder benachbarten Gewebe-Lagen derartig geformte Fasern, Drähte oder Lamellen integriert sind, dass sich das für die Finger wahrnehmbare Verhältnis von Kraftaufwand zu Federweg nicht-linear verhält und nach gewissem kleinen Federweg der weitere Kraftaufwand nicht steigt, sondern stagniert oder wieder abnimmt und ähnlich eines Kniehebel-Effekts ein feinmotorisch deutlich fühlbares Durchschalten bietet.

13. Eingabegerät nach einem oder mehreren der Ansprüche **9** bis **12 dadurch gekennzeichnet, dass** in die Gewebe-Lage eine relativ steife, elastische Faser oder Lamelle mit angemessener Vorspannung eingewebt ist, die an der Oberfläche dieser Gewebe-Lage leicht heraus ragende kleine Bögen aufspannt, die durch Fingerdruck elastisch einzudrücken sind, um ähnlich eines Kniehebel-Effekts ein feinmotorisch deutlich fühlbares Durchschalten zu bieten, insbesondere können sich die jeweils parallel geführten, zu betätigenden Faser- oder Lamellen-Bögen durch horizontalen Versatz, also Phasen-Verschiebung, gegenüber dem jeweils benachbarten Faser- oder Lamellen-Bogen gegenseitig stützen, so dass ihr Federweg dadurch überwiegend senkrecht zur Eingabe-Oberfläche geführt wird und insbesondere kann statt üblichen Fasern mit kreisähnlichem Querschnitt ein lamellenähnliches Halbzeug bzw. ein einem Flachband ähnliches Halbzeug in einer der Gewebe-Lagen eingewebt sein, so dass jeweils ein elastischer Lamellen-Bogen einen taktil wahrnehmbaren Eingabeflächenbereich erzeugt.

14. Eingabegerät nach einem oder mehreren der Ansprüche **9** bis **13**, insbesondere **13**, **dadurch gekennzeichnet, dass** die integrierten elastischen Fasern oder insbesondere Flachbänder oder Lamellen so vorgeformt sind, dass in bestimmten Abständen wiederholt jeweils eine Krümmung nach unten und eine Krümmung nach oben und wieder eine Krümmung in anfänglicher Richtung längs der Oberfläche auftreten - also eine Art Zick-Zack-Form oder Wellen-Form bilden, so dass bei der Einspannung etwa jedes zweiten, insbesondere jedes dritten oder vierten oder fünften dieser Krümmungs-Abschnitte in den unteren Gewebe-Bereich leichte Bögen bilden, die bei Druckausübung durch Finger sowohl wie ein überlasteter Brückenbogen nach unten federn als auch in ihrer Längsrichtung komprimieren, ohne nennenswert seitlich auszuscheren, um also durch ihr Verhältnis von Höhe dieser Krümmungs-Abschnitte zur Länge des dazwischen befindlichen Materials und durch die Kompressionsfähigkeit in waagerechter Richtung das Einfedern eines Bogens mit Kniehebel-Effekt zu unterstützen.

15. Eingabegerät nach einem oder mehreren der Ansprüche **9** bis **12**, insbesondere **12**, bestehend aus Material-Lagen mit integriertem Federdraht, **gekennzeichnet dadurch, dass** seitlich aus einer Hauptrichtung heraus geführte schlaufen-ähnliche Krümmungen ein feinmotorisch wahrnehmbares nicht-lineares Durchschalt-Verhalten durch einen auf Torsion belasteten Abschnitt bieten, der kombiniert mit einem Hebel-Abschnitt ist, der bei Belastung die Torsionsbelastung über-proportional ansteigen lässt, so dass damit die relative Steifigkeit der Konstruktion zusammen mit der Torsionssteifigkeit dieser Elemente nachlässt und **gekennzeichnet dadurch, dass** bei Belastung der durch die Biegesteifigkeit ihrer Elemente hergestellte Anteil der relativen Steifigkeit der gesamten Konstruktion nachlässt, weil die tragende vertikale Komponente der Elemente einen immer ungünstigeren Winkel einnimmt, also einen Kniehebel-Effekt bieten.

16. Eingabegerät nach einem oder mehreren der Ansprüche **9** bis **12**, insbesondere **12**, **gekennzeichnet dadurch, dass** vielfach in die Eingabeoberfläche integrierte Elemente so aufgebaut sind, dass ein Teil eines jeweils spitzwinkligen Kraghebels auf Zug belastet wird, ein anderer Teil dieses Kraghebels auf Druck belastet wird, der durch eine seitliche Ausbuchtung dieses zweiten Teils eine Biegebelastung erzeugt, so dass bei Betätigung des Kraghebels etwa senkrecht zur Eingabeoberfläche diese Ausbuchtung elastisch weiter ausbiegt und damit der Hebel seine Stützfähigkeit durch immer ungünstiger werdendem Hebel verliert und schliesslich bei minimaler Betätigungskraft nachgibt und ein feinmotorisch wahrnehmbares nicht-lineares Durchschalten bietet.

17. Eingabegerät nach Anspruch **13** oder **14**, **dadurch gekennzeichnet, dass** die Fasern oder Lamellen, die mechanische Eigenschaften des Feedbacks mit Kniehebel-Effekt bieten, in zwei insbesondere zueinander orthogonalen Richtungen eingewebt und miteinander verknüpft sind und sich dadurch in ihrer Lage gegenseitig stabilisieren.

18. Eingabegerät nach Anspruch **12** bestehend aus Gewebe-Lagen, **dadurch gekennzeichnet, dass** eine der Gewebe-Lagen aus einem unteren Gewebe-Bereich besteht, der dieser Gewebe-Lage eine mechanische Stabilität, insbesondere Zugfestigkeit verleiht und aus einem oberen Gewebe-Bereich besteht, der wesentlich aus den zu betätigenden Fasern, Drähten oder Flachband-Lamellen besteht und elastische Abschnitte aufweist, indem diese Fasern, Drähte oder Flachband-Lamellen als in sich frei tragende Abschnitte eingewebt sind. Diese zwei besagten Gewebe-Bereiche sind untereinander verwoben und bilden diejenige Gewebe-Lage, die ein feinmotorisch wahrnehmbares Feedback für die Finger erzeugt.

19. Eingabegerät nach Anspruch **12**, **gekennzeichnet dadurch, dass** die Betätigung eine Annäherung der besagten Faser-, Draht- oder Lamellen-Bögen an eine insbesondere quer verlaufende elektrisch leitende Faser der benachbarten Schicht bewirkt und damit eine messbare kapazitive Änderung erzeugt, die Signal gebend wirksam wird.

20. Eingabegerät nach Anspruch **9, dadurch gekennzeichnet, dass** besagte elektrisch wirksame Fasern, Lamellen oder Gewebe-Lagen einerseits und Licht emittierende Fasern andererseits miteinander verwoben sind und zusammen wirken, indem die insbesondere elektrisch kapazitiv wirksamen Fasern isoliert sein können und schon mit ihrer Annäherung eine hinreichend grosse Änderung insbesondere der elektrischen Kapazität zwischen den Fasern erzeugen, die als Signal-Auslösung zu werten ist, während die besagten visuell wirksamen Display-Fasern, insbesondere Licht emittierende Polymer-Fasern, genau durch die Berührung sich kreuzender Fasern Licht aussenden und nicht isoliert sind.

21. Eingabegerät nach Anspruch **9**, **dadurch gekennzeichnet, dass** eine obere Gewebe-Schicht oder Kunststoff-Schicht den gesamten Aufbau hinsichtlich tangential eingebrachter Kräfte stabilisiert und insbesondere dass der Aufbau an der Oberfläche mit einer elastischen und insbesondere transluzenten Kunststoff-Schicht überzogen wird, die Kompression mit besagtem besonderem Durchschaltverhalten bleibt weit gehend unabhängig davon, indem sie in einer anderen tieferen Gewebe-Schicht erfolgt.

22. Eingabegerät nach Anspruch **9** oder **12**, **dadurch gekennzeichnet, dass** besagte Eingabeflächenbereiche optional mit einer Schicht Electronic Ink oder mit einer Schicht Licht emittierenden Polymers, insbesondere OLED überzogen sind, um die momentane Zuordnung zwischen Eingabeflächenbereich und jeweiligem Zeichen visuell anzuzeigen.

## Claims

1. Input device in the form of a steering wheel or steering wheel element, composed of an input face having a plurality of touch-sensitive input face zones and a control unit which is coupled thereto, **characterized in that** the touching of the input face zones by areas of the hand, in particular by the balls of the hand, and by fingers is recognized as being by areas of the hand and fingers and used to calculate the identity of the individual fingers and thus to calculate a temporarily valid basic topography for the areas of the hand and for the fingers with respect to the input face zones, by means of which topography the assignment topography is to be calculated and by means of which assignment topography a respective alphanumeric character or a control function is to be assigned to some of the input face zones in an instantaneously valid fashion and in which whenever displacement occurs renewed initialisation of the basic topography takes place.

2. Input device according to Claim 1, **characterized in that** said assignment between input face zones and respective alphanumeric characters, switching functions or control functions can differentiate assignment locations, i.e. input face zones, which are to be actuated for bent finger positions from assignment locations, i.e. input face zones, which are to be actuated for extended finger positions.

3. Input device according to Claim 1 or 2, **characterized in that** the determination of a basic topography for the hands of the user with respect to the input face zones takes place in an initialization phase on the basis of the positioned hands of the user and is then continuously adapted to current conditions in an operating phase, and **in that** as a result an assignment topography which assigns a respective alphanumeric character or a control function to the input face zones in an instantaneously valid fashion is continuously adapted to individual and dynamic conditions.

4. Input device according to one or more of the preceding claims, **characterized in that** the determination of the assignment topography which assigns alphanumeric characters or control functions or switching functions to the input face zones is carried out in an initialization process according to a defined system which corresponds to a customary computer keyboard or a customary key assignment system for a mobile phone or corresponds to touch zones for up to ten fingers which are arranged in a longitudinal row or corresponds to touch zones around the index finger and thumb, said zones carrying out simple switching and control functions.

5. Input device according to Claim 1, composed of an input face with a large number of touch-sensitive input face zones and a control unit which is coupled thereto, **characterized in that** a grouping of alphanumeric functions or control functions or switching functions is available from a large number of basic positions of the areas of the hand and fingers with respect to the input face zones, the assignment of which functions to the specific input face zones is continuously and dynamically adapted to individual, instantaneous conditions.

6. Input device according to one or more of Claims 1 to 3, **characterized in that** two, three, four, five or six agreed control functions or switching functions can continuously be activated from a large number of positions of the areas of the hand and fingers with respect to the input face zones by means of the index finger, middle finger or thumb of the left hand or the right hand.

7. Input device according to one or more of Claims 1 to 3, **characterized in that** a series of alphanumeric characters, control characters or switching functions, which are similar in type and number to a customary computer keyboard, are available on said touch-sensitive surface of the input device, wherein the topographic arrangement of the input face zones which respectively correspond to the alphanumeric characters, control characters or switching functions , that is to say the assignment topography thereof, is adapted individually and dynamically to the hands, habits and instantaneous displacement and way of grasping.

8. Input device according to one or more of Claims 1 to 7, **characterized in that** the instantaneously valid assignment of characters or control functions to the input face zones is displayed visually to the user.

9. Computer input device according to Claim 1 or one other of the preceding claims, **characterized in that** said touch-sensitive steering wheel face is composed of layers or fabric layers which combine a plurality of interactively effective properties by in particular providing tactile feedback about the through connection of the surface and/or in particular provide visual feedback about the instantaneous, continuously variable assignments between input face zones and triggered characters or control functions, these assignments being in particular continuously dynamically adapted to the locations which are actually touched by typing fingertips and correspond to a variable assignment topography.

10. Input device according to Claim 9, **characterized in that** a fabric with electrically effective touch-sensitive fibers or lamellas and a fabric with display properties, in particular with light-emitting fibers, are laid one on top of the other in order to display visually the instantaneous assignment between the input face zone and respective character, this assignment corresponding to a continuously variable assignment topography in particular through continuous dynamic adaptation to the locations which are actually touched by the typing fingertips.

11. Input device according to Claim 9, composed of an input face with a plurality of touch-sensitive input face zones and a control unit which is coupled thereto, **characterized in that** a fabric is composed both of touch-sensitive fibers or lamellas which are effective electrically, electrostatically or by means of changes in electrical capacitance, and of fibers with a light emission capability which are woven thereto, said fibers with a light emission capability acting as a plurality of visually recognizable display zones in order to display visually the instantaneous assignment between the input face zone and respective character, this assignment corresponding to a continuously variable assignment topography in particular through continuous dynamic adaptation to the locations which are actually touched by the typing fingertips.

12. Input device according to one or more of Claims 9 to 11, **characterized in that** fibers, wires or lamellas which are shaped in such a way are integrated into the touch-sensitive fabric or adjacent fabric layers, **in that** the ratio of the application of force to the spring travel which can be perceived by the fingers behaves nonlinearly and after a certain small spring travel the further application force does not increase but rather stays the same or decreases again and provides a through connection which can be clearly felt in a sensitive fashion similar to a toggle-lever effect.

13. Input device according to one or more of Claims 9 to 12, **characterized in that** a relatively rigid, elastic fiber or lamella is woven into the fabric layer with appropriate pretension which forms small arches which protrude slightly out of the surface of this fabric layer and can be pressed in elastically by the pressure of a finger in order to provide a through connection which can be clearly felt in a sensitive fashion similar to a toggle-lever effect, in particular the fiber or lamella arches which respectively extend in parallel and are to be activated can be supported on one another through horizontal offset, that is to say phase shifting, in relation to the respectively adjacent fiber arch or lamella arch so that their spring travel is thus predominantly conducted perpendicularly to the input face, and in particular, instead of customary fibers with a circle-like cross section, a lamella-like semifinished product or a ribbon-like semifinished product can be woven into one of the fabric layers so that in each case an elastic lamella arch produces an input face zone which can be perceived in a tactile fashion.

14. Input device according to one or more of Claims 9 to 13, in particular 13, **characterized in that** the integrated elastic fibers or in particular ribbons or lamellas are preformed in such a way that in each case a downward and an upward curvature and again a curvature in the initial direction occur along the surface repeatedly at specific intervals - that is to say a zigzag shape or wave shape is formed so that during the fixing process of approximately every second, in particular every third or fourth or fifth of these curvature sections in the lower fabric area slight arches are formed which, when pressure is applied by fingers, both spring downwards like an overloaded arch of a bridge and are also compressed in their longitudinal direction, without moving out appreciably in the lateral direction, in order thus to support the spring compression of an arch with a toggle lever effect through their ratio of the height of these curvature sections to the length of the material located between them and through the compressibility in the horizontal direction.

15. Input device according to one or more of Claims 9 to 12, in particular 12, composed of material layers with an integrated spring wire, **characterized in that** loop-like curvatures which are made to extend laterally from a main direction provide a nonlinear through-connection behavior which can be perceived in a sensitive fashion by means of a torsion-loaded section which is combined with a lever section which under load permits the torsion loading to increase disproportionately so that as a result the relative rigidity of the structure, together with the torsional rigidity of these elements, decreases, and **characterized in that** under load the portion of relative rigidity of the entire structure which is brought about by the flexural rigidity of its elements decreases because the load-bearing vertical component of the elements assumes an increasingly unfavorable angle, that is to say it provides a toggle lever effect.

16. Input device according to one or more of Claims 9 to 12, in particular 12, **characterized in that** elements which are repeatedly integrated into the input interface are constructed in such a way that part of the respective acutely angled cantilever is subjected to tensile loading and another part of this cantilever is subjected to compressive loading, which generates bending loading by a lateral protrusion of the second part, so that when the cantilever is activated approximately perpendicularly with respect to the input interface, this protrusion bends out further elastically and therefore the lever loses its supporting capability as a result of a lever which becomes increasingly unfavourable, and finally when the actuation force is at a minimum it yields and provides non-linear switching, which permits finely adjustable motor control to be performed.

17. Input device according to Claim 13 or 14, **characterized in that** the fibers or lamellas which provide mechanical properties of the feedback with a toggle lever effect are woven in two directions, in particular directions which are orthogonal to one another, and are linked to one another and thus stabilize one another in their position.

18. Input device according to Claim 12, composed of fabric layers, **characterized in that** one of the fabric layers is composed of a lower fabric zone which gives this fabric layer a mechanical stability, in particular tensile strength, and is composed of an upper fabric zone which is composed essentially of the fibers, wires or ribbon lamellas to be activated, and has elastic sections, by virtue of the fact that these fibers, wires or ribbon lamellas are woven in as sections which are freely supporting per se. These two aforesaid fabric zones are woven to one another and form that fabric layer which produces feedback for the fingers which can be perceived in a sensitive fashion.

19. Input device according to Claim 12, **characterized in that** the activation causes the aforesaid fiber, wire or lamella arches to approach an electrically conductive fiber, which extends in particular transversely, of the adjacent layer and thus produces a measurable change in capacitance, which has the effect of producing a signal.

20. Input device according to Claim 9, **characterized in that** the aforesaid electrically effective fibers, lamellas or fabric layers, on the one hand, and light-emitting fibers, on the other, are woven to one another and interact by virtue of the fact that the in particular electrically capacitively effective fibers can be insulated and by approaching already produce a sufficiently large change between the fibers, in particular in the electrical capacitance, which change can be evaluated as a signal triggering process, while the aforesaid visually effective display fibers, in particular light-emitting polymer fibers, emit light precisely through the contact of intersecting fibers and are not insulated.

21. Input device according to Claim 9, **characterized in that** an upper fabric layer or plastic layer stabilizes the entire structure in terms of tangentially applied forces and in particular **in that** the structure is covered on the surface with an elastic and in particular translucent plastic layer, the compression with the aforesaid particular through-connection behavior remains largely independent of this by virtue of the fact that it takes place in a different, lower fabric layer.

22. Input device according to Claim 9 or 12, **characterized in that** the aforesaid input face zones are optionally covered with a layer of electronic ink or with a layer of light-emitting polymer, in particular OLED, in order to indicate visually the instantaneous assignment between the input face zone and the respective character.

## Revendications

1. Appareil d'entrée sous la forme d'un volant ou d'un élément de volant, constitué d'une surface d'entrée comportant une pluralité de zones de surface d'entrée sensibles au toucher et d'une unité de commande couplée à celles-ci,
**caractérisé en ce que** lorsque des zones de surface d'entrée sont touchées par des surfaces de la main, en particulier par les paumes de la main, et par les doigts, ces contacts sont reconnus comme étant des surfaces de la main et comme des doigts et sont utilisés pour calculer l'identité des doigts individuels et donc pour calculer une topographie de base temporairement valable pour des surfaces de la main et des doigts par rapport aux zones de surface d'entrée, cela permettant de calculer la topographie d'affectation, qui permet d'associer un caractère alphanumérique respectif ou une fonction de commande à une partie des zones de surface d'entrée d'une manière momentanément valable et, lors de chaque déplacement, une réinitialisation de la topographie de base se produit.

2. Appareil d'entrée selon la revendication 1, **caractérisé en ce que** ladite association entre des zones de surfaces d'entrée et des caractères alphanumériques respectifs, des fonctions de commutation ou de commande, permet d'effectuer une distinction entre des emplacements d'affectation, c'est-à-dire des zones de surface d'entrée à actionner pour des positions de doigts incurvées, et d'emplacements d'affectation, c'est-à-dire des zones de surface d'entrée à actionner pour des positions de doigts tendues.

3. Appareil d'entrée selon la revendication 1 ou 2, **caractérisé en ce que** la détermination d'une topographie de base pour les mains de l'utilisateur par rapport aux zones de surface d'entrée est effectuée au cours d'une phase d'initialisation sur la base des mains posées de l'utilisateur et est ensuite adaptée en continu aux conditions actuelles au cours d'une phase de fonctionnement, et **en ce qu'**une topographie d'affectation est adaptée en continu à des conditions individuelles et dynamiques, qui affectent de manière momentanément valable un caractère alphanumérique respectif ou une fonction de commande aux zones de surface d'entrée.

4. Appareil d'entrée selon l'une ou plusieurs des revendications précédentes, **caractérisé en ce que** la détermination de la topographie d'affectation, qui associe des caractères alphanumériques ou des fonctions de commande ou des fonctions de commutation aux zones de surface d'entrée, est effectuée au cours d'une initialisation selon un schéma fixe, qui correspond à un clavier d'ordinateur classique ou à une association classique de touches d'un téléphone mobile ou correspond à des zones de touches disposées longitudinalement pour au plus dix doigts ou qui correspond à des zones de toucher situées autour des index et des pouces, qui remplissent des fonctions simples de commutation et de commande.

5. Appareil d'entrée selon la revendication 1, constitué d'une surface d'entrée comportant de nombreuses zones de surface d'entrée sensibles au toucher et d'une unité de commande couplée à celles-ci, **caractérisé en ce qu'**un groupement de fonctions alphanumériques ou de fonctions de commande ou de fonctions de commutation est disponible à partir de nombreuses positions de base des surfaces de la main et des doigts en face des zones de surface d'entrée, dont l'association aux zones de surface d'entrée proprement dites est adaptée de manière continue et dynamique à des conditions individuelles et momentanées.

6. Appareil d'entrée selon l'une ou plusieurs des revendications 1 à 3, **caractérisé en ce que** deux, trois, quatre, cinq ou six fonctions de commande ou fonctions de commutation convenues à partir de nombreuses positions des surfaces de la main et des doigts en face des zones de surface d'entrée doivent toujours être actionnées par les index, les majeurs ou les pouces de la main gauche ou droite.

7. Appareil d'entrée selon l'une ou plusieurs des revendications 1 à 3, **caractérisé en ce qu'**une série de caractères alphanumériques, de caractères de commande ou de fonctions de commutation sont disponibles sur ladite surface sensible au toucher de l'appareil d'entrée, lesquels sont semblables en type et en nombre à un clavier informatique classique et dans lequel la disposition topographique des zones de surface d'entrée correspondant aux caractères alphanumériques, aux caractères de commande ou aux fonctions de commutation - c'est-à-dire à leur topographie d'affectation - est adaptée individuellement et dynamiquement aux mains, aux habitudes ainsi qu'au déplacement et à au changement de prise actuels.

8. Appareil d'entrée selon l'une ou plusieurs des revendications 1 à 7, **caractérisé en ce que** l'association momentanément valable de caractères ou de fonctions de commande aux zones de surface d'entrée est présentée optiquement à l'utilisateur.

9. Appareil d'entrée d'ordinateur selon la revendication 1 ou une autre revendication précédente, **caractérisé en ce que** ladite surface de volant sensible au toucher est constituée de couches ou de nappes de tissu combinant une pluralité de propriétés à effet interactif, en particulier en procurant une rétroaction tactile sur la commutation traversante de la surface et/ou en particulier en procurant une rétroaction visuelle sur les associations instantanées et continuellement variables entre des zones de surface d'entrée et des caractères ou des fonctions de commande déclenchés, dans lequel lesdites associations s'adaptent en particulier de manière dynamique et continue aux emplacements effectivement touchés par la frappe des extrémités des doigts et correspondent à une topographie d'affectation variable.

10. Appareil d'entrée selon la revendication 9, **caractérisé en ce qu'**un tissu comportant des fibres ou des lamelles sensibles au toucher et à effet électrique et un tissu présentant des propriétés d'affichage, comportant en particulier des fibres émettrices de lumière, sont superposés l'un à l'autre pour afficher optiquement l'association momentanée entre la zone de surface d'entrée et le caractère respectif, dans lequel ladite association correspond en particulier, par une adaptation dynamique et continue, aux emplacements effectivement occupés par les extrémités des doigts effectuant la frappe d'une topographie d'affectation continument variable.

11. Appareil d'entrée selon la revendication 9, constitué d'une surface d'entrée comportant une pluralité de zones de surface d'entrée sensibles au toucher et une unité de commande couplée à celles-ci, **caractérisé en ce qu'**un tissu est constitué à la fois de fibres ou de lamelles sensibles au toucher à effet électrique, électrostatique ou de variation de capacité électrique, et de fibres qui sont entrelacées avec celles-ci et qui sont capables d'émettre de la lumière, dans lequel lesdites fibres agissent comme une pluralité de zones d'affichage visuellement reconnaissables pour afficher visuellement l'association actuelle entre la zone de surface d'entrée et le caractère respectif, dans lequel ladite association correspond en particulier, par une adaptation dynamique et continue, aux emplacements effectivement occupés par les extrémités des doigts effectuant la frappe d'une topographie d'affectation continument variable.

12. Appareil d'entrée selon l'une ou plusieurs des revendications 9 à 11, **caractérisé en ce que** des fibres, des fils ou des lamelles formés dans le tissu sensible au toucher ou dans des nappes de tissu adjacentes sont intégrés de telle manière que le rapport entre la dépense de force et la course de ressort perceptible par les doigts se comporte de manière non linéaire et qu'après une petite course de ressort donnée, la dépense de force supplémentaire ne s'accroisse pas mais stagne ou diminue encore et permette d'obtenir une commutation traversante qui, de manière semblable à un effet de levier basculant, peut être nettement et finement perceptible du point de vue moteur.

13. Appareil d'entrée selon l'une ou plusieurs des revendications 9 à 12, **caractérisé en ce qu'**une fibre ou lamelle élastique relativement rigide, présentant une précontrainte appropriée, est tissée dans la couche de tissu, cela ayant pour effet de tendre légèrement, à la surface de ladite couche de tissu, de petits arcs qui doivent être comprimés élastiquement par pression des doigts, afin d'obtenir une commutation traversante qui, de manière semblable à un effet de levier basculant, peut être nettement et finement perceptible du point de vue moteur, en particulier, les arcs de fibres ou de lamelles qui sont guidés parallèlement et qui doivent être respectivement actionnés, peuvent se renforcer mutuellement par décalage horizontal, et par conséquent, par des déphasages, par rapport à des arcs de fibres ou de lamelles adjacents, de telle manière que leur course de ressort soit guidée principalement perpendiculairement à la surface d'entrée et, en particulier, au lieu de fibres classiques de section circulaire, un produit semi-fini lamellaire ou un produit semi-fini semblable à une ruban plat, peut être tissé dans l'une des nappes de tissu, de telle manière qu'un arc de lamelles élastique produise respectivement une zone de surface d'entré sensible au toucher.

14. Appareil d'entrée selon l'une ou plusieurs des revendications 9 à 13, en particulier la revendication 13, **caractérisé en ce que** les fibres élastiques intégrées ou en particulier les rubans plats ou les lamelles sont préformés de telle manière qu'à des intervalles déterminés, il se produise de manière répétée une courbure vers le bas et une courbure vers le haut a et de nouveau une courbure dans la direction initiale le long de la surface - c'est-à-dire qu'il apparaît une forme en zigzag ou une forme de vague, de sorte que, lorsqu'environ une sur deux, en particulier une sur trois, sur quatre ou sur cinq desdites sections incurvées est soumise à une tension dans la zone de tissu inférieure, des il se forme des arcs peu prononcés qui, lorsqu'une pression est exercée par les doigts, se déforment vers le bas à la manière d'un arc de pont surchargé et se compriment dans leur direction longitudinale sans se déporter latéralement de manière sensible, pour ainsi supporter la compression d'un arc avec effet de levier basculant en raison de son rapport entre la hauteur desdites sections incurvées et la longueur du matériau situé entre celles-ci et de l'aptitude à la compression dans la direction horizontale.

15. Appareil d'entrée selon l'une ou plusieurs des exigences 9 à 12, en particulier la revendication 12, constitué de couches de matériau comportant un fil élastique intégré, **caractérisé en ce que** des courbures en forme de boucle guidées latéralement hors d'une direction principale permettent d'obtenir un comportement de commutation traversante non linéaire finement perceptible du point de vue moteur à travers une partie soumise à une charge de torsion qui est combinée à une partie à levier qui provoque une augmentation disproportionnée de la charge de torsion sous charge, de sorte que la rigidité relative de la structure, associée à la rigidité à la torsion desdits éléments, diminue, **caractérisé en ce que**, sous charge, la partie de la rigidité relative de l'ensemble de la structure qui est due à la rigidité en flexion de ses éléments, diminue en raison du fait que la composante verticale portante des éléments présente un angle de plus en plus défavorable, et permet ainsi d'obtenir un effet de levier basculant.

16. Appareil d'entrée selon l'une ou plusieurs des revendications 9 à 12, en particulier la revendication 12, **caractérisé en ce que** des éléments intégrés dans la surface d'entrée sont réalisés en de multiples exemplaires de telle manière qu'une partie d'un levier en porte-à-faux formant un angle aigu respectif est chargée en tension et qu'une autre partie dudit levier en porte-à-faux est chargée en compression, cela produisant une charge en flexion par un renflement latéral de ladite seconde partie, de sorte que lorsque le levier en porte-à-faux est actionné approximativement perpendiculairement à la surface d'entrée, ledit renflement continue de s'incurver élastiquement et que le levier perd ainsi sa capacité de support en raison de l'effet de levier de plus en plus défavorable et qu'il finit par céder sous l'effet d'une force d'actionnement minimale et qu'il permet d'obtenir une commutation traversante non linéaire finement perceptible du point de vue moteur.

17. Appareil d'entrée selon la revendication 13 ou 14, **caractérisé en ce que** les fibres ou les lamelles, qui permettent d'obtenir des propriétés mécaniques de la rétroaction avec effet de levier basculant, sont tissées et reliées les unes aux autres dans deux directions, en particulier orthogonales l'une à l'autre, et se stabilisent ainsi mutuellement dans leur position.

18. Appareil d'entrée selon la revendication 12, constitué de nappes de tissu, **caractérisé en ce que** l'une des nappes de tissu est constituée d'une zone de tissu inférieure qui confère à ladite couche de tissu une stabilité mécanique, en particulier une résistance à la traction, et d'une zone de tissu supérieure constituée essentiellement des fibres, fils ou lamelles de ruban plat devant être actionnés et qui comporte des parties élastiques, en entrelaçant les fibres, fils ou lamelles de rubans plats sous forme de parties autoportantes, lesdites deux zones de tissus étant entrelacées et formant la couche de tissu qui produit une rétroaction finement perceptible du point de vue moteur par les doigts.

19. Appareil d'entrée selon la revendication 12, **caractérisé en ce que** l'actionnement amène lesdits arcs de fibres, de fils ou de lamelles à se rapprocher d'une fibre électriquement conductrice, en particulier transversale, de la couche adjacente, et produit ainsi une variation capacitive mesurable qui a pour effet de générer un signal.

20. Appareil d'entrée selon la revendication 9, **caractérisé en ce que** les fibres, lamelles ou nappes de tissu à effet électrique, d'une part, et les fibres émettrices de lumière, d'autre part, sont entrelacées et interagissent entre elles, **en ce que** les fibres à effet électrique, en particulier les fibres capacitives, peuvent être isolées et produisent déjà lors d'un rapprochement par rapport à celles-ci une variation suffisamment importante, en particulier de la capacité électrique, entre les fibres, devant être exploitée en tant que déclenchement par signal, tandis que lesdites fibres d'affichage à effet visuel, en particulier les fibres polymères émettrices de lumière, émettent de la lumière précisément lorsque les fibres qui se croisent et ne sont pas isolées sont touchées.

21. Appareil d'entrée selon la revendication 9, **caractérisé en ce qu'**une couche de tissu ou une couche de matière plastique supérieure stabilise l'ensemble de la structure par rapport aux forces introduites tangentiellement et en particulier **en ce que** la structure est recouverte en surface d'une couche de matière plastique élastique et en particulier translucide, et **en ce que** la compression due audit comportement de commutation traversante particulier reste largement indépendante de celui-ci en raison du fait qu'elle se produit dans une autre couche de tissu plus profonde.

22. Appareil d'entrée selon la revendication 9 ou 12, **caractérisé en ce que** lesdites zones de surface d'entrée sont facultativement revêtues d'une couche d'encre électronique ou d'une couche de polymère émetteur de lumière, en particulier de type OLED, afin d'indiquer visuellement l'association instantanée entre la zone de surface d'entrée et le caractère respectif.
